Europäisches Patentamt

European Patent Office

Office européen des brevets

(19)

(11) Veröffentlichungsnummer: **0 184 127**
**B1**

(12) **EUROPÄISCHE PATENTSCHRIFT**

(45) Veröffentlichungstag der Patentschrift: **04.04.90**

(51) Int. Cl.⁵: **C 09 D 101/18**

(21) Anmeldenummer: **85115041.7**

(22) Anmeldetag: **27.11.85**

(54) **Zähflüssiges cellulosehaltiges Gemisch (Paste) und deren Verwendung zur Herstellung von wässrigen Überzugsdispersionen.**

(30) Priorität: **06.12.84 DE 3444493**

(43) Veröffentlichungstag der Anmeldung:
**11.06.86 Patentblatt 86/24**

(45) Bekanntmachung des Hinweises auf die
Patenterteilung:
**04.04.90 Patentblatt 90/14**

(84) Benannte Vertragsstaaten:
**DE FR GB IT**

(56) Entgegenhaltungen:
**EP-A-0 076 443
DE-A-1 922 411
DE-A-3 324 904
DE-C- 918 286
US-A-2 792 314**

(73) Patentinhaber: **Wolff Walsrode
Aktiengesellschaft
Postfach
D-3030 Walsrode 1 (DE)**

(72) Erfinder: **Lühmann, Erhard
Kastanienweg 2
D-3036 Bomlitz (DE)**
Erfinder: **Hoppe, Lutz, Dr.
Am Badeteich 8
D-3030 Walsrode (DE)**
Erfinder: **Szablikowski, Klaus, Dr.
Claudiusstrasse 5
D-3030 Walsrode (DE)**
Erfinder: **Traenckner, Hans-Joachim, Dr.
Amselweg 2
D-3032 Fallingbostel (DE)**

(74) Vertreter: **Zobel, Manfred, Dr. et al
c/o BAYER AG Konzernverwaltung RP
Patentabteilung Bayerwerk
D-5090 Leverkusen (DE)**

Courier Press, Leamington Spa, England.

**Beschreibung**

Es ist bekannt, wäßrige Überzugsmittel auf Basis von Celluloseester herzustellen.

So wird in der DE—A—2 203 554 die Herstellung von Nitrocelluloselackemulsion beschrieben, die einen Feststoffgehalt von 13 Gew.-% bis 16,6 Gew.-% und einen Lösungsmittelanteil von 37,6 Gew.-% bis 44,2 Gew.-% aufweisen.

Die Konzentrationsverhältnisse Feststoff zu Lösungsmittel sind immer kleiner als eins und entsprechen den üblichen Konzentrationsverhältnisse (s. DE—A—2 203 554, Seite 5, 1. Absatz mit Hinweis A. Kraus, Handbuch der Nitrocelluloselacke, Verlag W. Pansegrau, Berlin-Wilmersdorf, 1952).

Der hohe Lösungsmittelanteil wird als notwendig angesehen, da man nach den üblichen mechanischen Emulgiertechmiken (s. DE—A—2 203 554, Seite 5, 1. Absatz) eine niedrig viskose organische Phase, die die Lackkomponenten enthält, zur Erzielung einer lagerstabilen Emulsion für erforderlich hält. Man war der Ansicht, daß sich die organische Phase nicht in die notwendigen Tröpfchenform emulgieren läßt, wenn sie zähflüssig oder pastenförmig ist (A. Kraus, Zentralblatt 1940, s. 225, 225).

Um diesen Nachteil zu vermeiden, wurde versucht, die Lackkomponenten in einem Überschuß an organischen Lösungsmitteln zu lösen, dann in Wasser zu emulgieren und anschließend das organische Lösungsmittel wieder völlig oder teilweise abzudestilieren (DE—A—2 703 075, DE—B—1 286 672). Nachteilig bei diesem Verfahren ist, daß es sehr aufwendig ist.

Aus der EP—A—0 076 443 sind bereits cellulosehaltige Pasten mit ethoxylierten Weichmachern bekannt, die aber vergilben können.

Überraschenderweise wurde gefunden, daß die erfindungsgemäß zusammengesetzten, zähflüssigen, cellulosehaltigen Pasten auf direktem Weg in lösungsmittelarme und feststoffreiche wäßrige Celluloselackdispersionen übergeführt werden können, wenn das Verhältnis Feststoff zu Lösungsmittel vor dem Dispergieren in Wasser größer oder gleich 1 ist und die cellulosehaltige Paste als Emulgatoren bestimmte anionenaktive Emulgatoren enthält.

Dabei wird eine lagerstabile Dispergierung der organischen Phase in Wasser ohne Einwirkung größere Scherkräfte und bei niedrigen Temperaturen (bis höchstens 60°C) erreicht. Außerdem zeichnen sich die Überzüge, die aus den entsprechenden wäßrigen Dispersionen hergestellt wurden durch eine sofort glänzende, vergilbungsbeständige Oberfläche aus, die nicht mehr aufpoliert werden muß.

Gegenstand der Erfindung sind zähflüssige cellulosehalige Gemische bzw. Pasten aus:

5,0 —60 Gew.-% vorzugsweise 15—45% (Gew.) Celluloseester
0 —55 Gew.-% vorzugsweise 0—35% (Gew.) üblichen Larkharzen
0,0 —40 Gew.-% vorzugsweise 0—35% (Gew.) Weichmacher
0,05—1,5 Gew.-% vorzugsweise 0,1—1,3% (Gew.) anionen-aktive Emulgatoren
5 —45 Gew.-% vorzugsweise 5—35 Gew.-% wenigstens eines organischen Lösungsmittels
0 —30 Gew.-% vorzugsweise 5—25% (Gew.) Wasser,

wobei die Gew.-% immer 100 ergeben müssen und wobei das Verhältnis Feststoff zu organischen Lösungsmittel größer oder gleich 1 ist, dadurch gekennzeichnet, daß als anionenaktive Emulgatoren Sulfonobernsteinsäurederivate von ethoxylierten Nonylphenolen verwendet werden, die in Mengen von maximal 1,5 Gew.-%, bezogen auf Feststoffgehalt, eingesetzt werden.

Ein weiterer Gegenstand der Erfindung sind Verfahren zur Herstellung von lagerstabilen, wäßrigen Überzugsmitteldispersionen des Öl-in-Wasser-Typs auf der Grundlage der erfindungsgemäßen Gemische bzw. Pasten, dadurch gekennzeichnet, daß man in das erfindungsgemäße Gemisch bzw. Paste ohne weitere Verdünnung unter Einhaltung von Temperaturen von höchstens 60°C, Wasser in den üblichen Mengen vorzugsweise tropfenweise, zugibt.

Als Celluloseester eignen sich vorzugsweise Nitrocellulose aller Viskositätsstufen oder plastifizierte Nitrocellulose oder deren Mischungen.

Ganz besonders geeignet ist Nitrocellulose, beispielsweise die üblichen Collodiumwollequalitäten, d.h., Cellulosesalpetersäureester mit einem Stickstoffgehalt von 10,2 bis 12,4 Gew.%.

Als gegebenenfalls mitzuverwendende Weichmacher können die üblichen Weichmacher wie z.B. die Ester von aliphatischen Monocarbonsäuren, wie Cetylacetat, Glykoldiacetat, Stearate, Ricinolacetate, aromatische Monocarbonsäuren, wie z.B. der Dioctyladipat, Dimethylcyclohexylmethyladipat, Dibutylsebacat; aromatischen Dicarbonsäuren, wie z.B. Dibutylphthalat, Dioktylphthalat, Dicyclohexylphthalat, Dimethylglykolphthalat, aliphatischen Tricarbonsäuren, wie z.B. Tributylcitrat, anorganischen Säuren, wie z.B. Tributylphosphat, Triphenylphosphat; sowie Sulfonamide, Öle wie Rizinusöl und Leinöl und die Ethoxylierungsprodukte der genannten Verbindungen, wie z.B. ethoxylierte Rizinusöle und Sojaöle, Stearate und Phosphorsäureester eingesetzt werden.

Die anionenaktiven Emulgatoren sind insbesondere die Dinatriumsalze der Sulfonobernsteinsäurederivate von ethoxylierten Nonylphenolen.

Als Lösungsmittel zur Herstellung der organischen Phase kommen alle üblichen organischen Lösungsmittel in Betracht.

Vorzugsweise werden Acetate, wie Ethylacetat, Isopropylacetat, Butylacetat, 2-Ethylhexylacetat,

2

Methoxypropylacetat Methox-n-butylacetat und Butylglykolacetat, Ketone wie Methylisobutylketon, Diisobutylketon, 2-Cyclohexylhexanon und Isophoron verwendet.

Der Celluloseesterlösung können noch weitere übliche Harze, wie z.B. Alkyd-, Maleinsäure-, Phenol/ Formaldehyd-, Xylol-, Formaldehyd-, Keton-, Sulfonamid-, Aldehyd-, Amin-, Epoxy-, Carbamidsäureester-, Kumaron-Inden-Harze, Ester der Saccharose, Vinyl-, Acrylat- und deren Copolymerisationsharze zugesetzt werden.

Die Überzugsmitteldispersionen werden hergestellt, indem man die Celluloseester, einen oder mehrere Emulgatoren und gegebenenfalls den Weichmacher und gegebenenfalls weitere Harze, unter Verwendung eines organischen Lösungsmittel oder Lösungsmittelgemisches ineinander löst und in das erhaltene zähflüssige cellulosehaltige Gemisch (Paste) unter Einhaltung von Temperaturen von höchstens 60°C, vorzugsweise höchstens 45°C, Wasser vorzugsweise tropfenweise, hinzugibt.

Je nach Anwendungsgebiet (z.B. Holz-, Metall-, Kunststoff-, Papier-, Leder-, Glas- und Folienlackierungen) können noch weitere bekannte organische Lösungsmittel der Emulsion zugesetzt werden, wobei die Lösungsmittelkonzentration 25% bezogen auf die Endlackformulierung, nicht überschritten werden soll. Ferner können der Dispersion vorzugsweise der wäßrigen Phase auch solche Stoffe zugesetzt werden, die die Verarbeitung oder anwendungstechnischen Eigenschaften verbessern, wie z.B. Gleitmittel, Glanzverbesserungsmittel, Antischaummittel, Schleifbarkeits-Verbesserungsmittel, Verlaufmittel, Stabilisatoren, Lichtschutzmittel und Farbstoffe.

Die gemäß der Erfindung hergestellten wäßrigen Überzugsmitteldispersionen weisen einen sehr guten Verlauf, hohen Glanz und gute Lagerbeständigkeit auf. Entsprechend der Anwendung formulierten Lackzusammensetzung können diese z.B. ausgezeichnete Alkohol- und Wasserbeständigkeiten oder Naßreibechtheiten aufweisen.

Außerdem zeigen sie ein hohes Maß an Vergilbungsbeständigkeit und einen ausgezeichneten Glanz, der nicht mehr aufpoliert werden muß.

Ein weiterer Gegenstand der Erfindung ist daher auch die Verwendung der wäßrigen Dispersionen zur Herstellung von schnell trocknenden Überzügen, insbesondere auf Papier-, Metall- und Kunststoff-Folien.

Beispiel 1

In einer Lösungs aus

| | |
|---|---|
| 0,45 Gew.-Teilen | Emulgator (Umsetzungsprodukt von ethoxyliertem Nonylphenol mit 50 EO-Einheiten mit Maleinsäureanhydrid und Natriumhydrogensulfit) |
| 10,00 Gew.-Teilen | Dibutylphthalat |
| 7,00 Gew.-Teilen | Ethylglykolacetat |
| 6,00 Gew.-Teilen | Methylisoamylketon |
| 5,00 Gew.-Teilen | Diacetonalkohol wurden |
| 45,46 Gew.-Teilen | Cellulosenitrat der Norm 34 E mit 35 Gew.-% Wasser als Anfeuchtungsmittel unter Rühren eingerührt und homogenisiert. Nach der Homogenisierung wurden bei einer Temperatur von 20°C tropfenweise |
| 57,21 Gew.-Teile | Wasser eingerührt. |

Es entstand eine 33 gew.-%ige lagerstabile Dispersion mit 15 Gew.-% Lösungsmittel. Diese Dispersion wurde mittels eines Rakels (15 μm) auf eine Prüfkarte (Erichsen, Typ 2415) aufgezogen und 2 Minuten bei 160°C getrocknet. Die Oberfläche war nicht vergilbt und glänzte sofort.

**Patentansprüche**

1. Zähflüssige cellulosehaltige Gemische bzw. Pasten aus:

| | | |
|---|---|---|
| 5,0 —60 | Gew.-% | Celluloseester |
| 0,0 —55 | Gew.-% | eines üblichen Larkharzes |
| 0,0 —40 | Gew.-% | Weichmacher |
| 0,05— 1,5 | Gew.-% | anionenaktive Emulgatoren |
| 5 —45 | Gew.-% | wenigstens eines organischen Lösungsmittels |
| 0,0 —30 | Gew.-% | Wasser, |

wobei die Gew.-% immer 100 ergeben müssen und wobei das Verhältnis Feststoff zu organischem Lösungsmittel größer oder gleich 1 ist, dadurch gekennzeichnet, daß als anionenaktive Emulgatoren Sulfonobernsteinsäurederivate von ethoxylierten Nonylphenolen verwendet werden, die in Mengen von maximal 1,5 Gew.-%, bezogen auf Feststoffgehalt, eingesetzt werden.

2. Gemische oder Pasten nach Anspruch 1, bestehend aus

| | | |
|---|---|---|
| 15 —45 | Gew.-% | Celluloseester |
| 0 —35 | Gew.-% | üblichen Larkharzen |
| 0 —35 | Gew.-% | Weichmacher |

# EP 0 184 127 B1

0,1— 1,3 Gew.-% anionenaktive Emulgatoren
5 —35 Gew.-% wenigstens eines organischen Lösungsmittels
5 —25 Gew.-% Wasser.

3. Gemische oder Pasten nach Anspruch 1 oder 2, dadurch gekennzeichnet, daß als anionische Aktivatoren Dinatriumsalze eingesetzt werden.

4. Verfahren zur Herstellung von lagerstabilenwäßrigen Überzugsmittelemulsionen des Öl-in-Wasser-Typs auf der Grundlage eines zähflüssigen, celluloseesterhaltigen Gemisches oder einer Paste nach Anspruch 1, dadurch gekennzeichnet, daß man in das celluloseesterhaltige Gemisch oder in die Paste ohne weitere Verdünnung direkt unter Einhaltung von Temperaturen von höchstens 60°C Wasser in üblichen Mengen einarbeitet.

5. Verfahren nach Anspruch 4, dadurch gekennzeichnet, daß man das Wasser tropfenweise unter Einhaltung von Temperaturen von höchstens 45°C zugibt.

6. Schnell trocknende, sofort glänzende, nicht vergilbende Überzüge aus wäßrigen Dispersionen, hergestellt mit einer Emulsion gemäß Anspruch 4.

## Revendications

1. Mélanges ou pâtes visqueux contenant de la cellulose, comportant:

5,0 à 60% en poids d'un ester de la cellulose,
0,0 à 55% en poids d'une résine usuelle pour laque ou vernis,
0,0 à 40% en poids d'un plastifiant,
0,05 à 1,5% en poids d'émulsifiant à anions actifs,
5 à 45% en poids d'au moins un solvant organique,
0,0 à 30% d'eau,

la somme des pourcentages en poids devant toujours donner 100% et le rapport de la matière sèche au solvant organique étant supérieur ou égal à 1, mélanges caractérisés en ce qu'on utilise, comme émulsifiant à anions actifs, des dérivés d'un acide sulfosuccinique de nonylphénols éthoxylés que l'on introduit en des quantités d'au maximum 1,5% en poids, sur la base de la teneur en matière sèche.

2. Mélanges ou pâtes selon la revendication 1, consistant en

15 à 45% en poids d'un ester de la cellulose,
0 à 35% en poids de résines usuelles pour laques et vernis,
0 à 35% en poids d'un plastifiant,
0,1 à 1,3% en poids d'émulsifiants à anions actifs,
5 à 35% en poids d'au moins un solvant organique,
5 à 25% en poids d'eau.

3. Mélanges ou pàtes selon la revendication 1 ou 2, caractérisés en ce qu'on utilise, comme activateurs anioniques, des sels disodiques.

4. Procédé pour préparer des émulsions aqueuses, stables au magasinage, pour obtention de revêtement, du type huile-dans-eau à base d'un mélange, ou d'une pâte, visqueux contenant un ester de cellulose, selon la revendication 1, procédé caractérisé en ce qu'on incorpore à un mélange contenant un ester de cellulose ou à la pâte, sans autre dilution et en opérant directement en maintenant des températures d'au maximum 60°C, de l'eau introduite en des quantités usuelles.

5. Procédé selon la revendication 4, caractérisé en ce qu'on ajoute l'eau goutte à goutte en maintenant des températures d'au maximum 45°c.

6. Revêtements séchant vite, brillant immédiatement, ne jaunissant pas, obtenus à partir de dispersions aqueuses préparées à l'aide d'une émulsion obtenue selon la revendication 4.

## Claims

1. Viscous cellulose-containing mixtures or pastes of

5,0 —60 % by weight cellulose ester
0,0 —55 % by weight of a typical paint resin
0,0 —40 % by weight plasticizer
0,05— 1,5 % by weight anionic emulsifiers
5 —45 % by weight of at least one organic solvent
0,0 —30 % by weight water

The percentages by weight always having to add to 100 and the ratio of solids to organic solvent being greater than or equal to 1, characterized in that sulfosuccinic acid derivatives of ethoxylated nonyl phenols

4

are used as the anionic emulsifiers in quantities of at most 1.5% by weight, based on the solids content.

2. Mixtures or pastes as claimed in claim 1 consisting of

15 —45 % by weight cellulose ester
0 —35 % by weight of a typical paint resin
0 —35 % by weight plasticizer
0,1— 1,3 % by weight anionic emulsifiers
5 —35 % by weight of at least one organic solvent
5 —25 % by weight water.

3. Mixtures of pastes as claimed in claim 1 or 2, characterized in that disodium salts are used as the anionic emulsifiers.

4. A process for the production of storable aqueous coating emulsions of the oil-in-water type based on the viscous, cellulose-ester-containing mixture or paste claimed in claim 1, characterized in that water in typical quantities is directly incorporated in the cellulose-ester-containing mixture or paste without further dilution at temperatures of at most 60°C.

5. A process as claimed in claim 4, characterized in that the water is added dropwise at temperatures of at most 45°C.

6. Quick-drying, instant-gloss, non-yellowing coatings of aqueous dispersions prepared using the emulsion claimed in claim 4.